# FASCICULE DE BREVET EUROPEEN

(11) **EP 3 604 740 B1**
(45) Date de publication et mention de la délivrance du brevet: **19.05.2021**
(21) Numéro de dépôt: 19188278.6
(22) Date de dépôt: 25.07.2019
(51) Int. Cl.: F01D 5/14, F01D 5/28

(54) **AUBE COMPOSITE À ARMATURE MÉTALLIQUE ET SON PROCÉDÉ DE FABRICATION**
LEITRADSCHAUFEL AUS VERBUNDMATERIAL MIT METALLVERSTÄRKUNG, UND IHR HERSTELLUNGSVERFAHREN
COMPOSITE VANE WITH METAL FRAME AND MANUFACTURING METHOD THEREOF

(30) Priorité: 31.07.2018 FR 1857143
(43) Date de publication de la demande: 05.02.2020
(73) Titulaire: SAFRAN AIRCRAFT ENGINES, 75015 Paris (FR)
(72) Inventeur: FROMONTEIL, Didier, 77550 MOISSY-CRAMAYEL (FR); DALLOZ, Alexandre, 77550 MOISSY-CRAMAYEL (FR)
(74) Mandataire: Cabinet Beau de Loménie

(56) Documents cités:
- EP-A1- 3 064 708
- EP-A1- 3 121 375
- FR-A1- 3 011 269
- US-A- 3 903 578
- US-A1- 2003 129 061

## Description

### Arrière-plan de l'invention

La présente invention se rapporte au domaine général des aubes pour moteur aéronautique à turbine à gaz et de leur procédé de fabrication.

De telles aubes peuvent équiper tout type de turbomachine, terrestre ou aéronautique et, par exemple, un turboréacteur d'avion ou un turbomoteur d'hélicoptère. En particulier, il peut s'agir d'une aube directrice de sortie ou "OGV" (pour "outlet guide vane"), d'une aube directrice d'entrée ou "IGV" (pour "inlet guide vane"), ou d'une aube de stator à calage variable ou "VSV" (pour "variable stator vane").

Dans le domaine des turbomachines, les aubes peuvent être métalliques ou composites. Le document US 2016/153295 décrit la réalisation d'une aube composite comprenant une âme métallique associée à une matrice organique, l'âme métallique formant la face intrados ou extrados de l'aube. Si une telle aube composite présente l'avantage d'être plus légère qu'une aube entièrement métallique, sa conception doit être particulièrement bien étudiée car elle est moins robuste qu'une aube métallique. En particulier, la ou les parties de l'aube utilisées pour fixer l'aube à la turbomachine doivent présenter une bonne tenue mécanique car c'est par elles que transitent les efforts aérodynamiques auxquels l'aube est soumise. D'autres documents pertinents sont EP3064708,

EP3121375, US 3903578, US2003129061.

### Objet et résumé de l'invention

La présente invention a donc pour but principal de proposer une aube composite qui présente une masse relativement faible tout en assurant une bonne résistance mécanique vis-à-vis des efforts aérodynamique ainsi qu'une fixation fiable.

Conformément à l'invention, ce but est atteint grâce à une aube composite selon la revendication 1.

L'armature métallique assure à la fois la rigidité de l'aube et la résistance mécanique de sa fixation. Par conséquent, l'armature métallique permet de conférer à l'aube composite un caractère structural, et ce avec une bonne maîtrise de la masse globale de l'aube. En effet, le matériau métallique n'est utilisé que pour former un squelette permettant de conférer les fonctions structurales requises, le reste du volume de l'aube étant occupé par la matrice organique qui définit essentiellement le profil aérodynamique de l'aube et qui présente une masse volumique inférieure à celle d'un matériau métallique.

Selon une première caractéristique particulière de l'aube de l'invention, l'armature métallique comprend en outre une portion de protection formant un bord d'attaque de l'aube, la portion de protection formant une seule pièce avec l'âme longitudinale et ladite au moins une base de fixation. En intégrant le bord d'attaque à l'armature métallique, on renforce la partie bord d'attaque de l'aube composite tout en simplifiant grandement la fabrication de l'aube notamment par rapport aux solutions de fabrication consistant à rapporter un clinquant métallique sur une préforme composite.

Selon une deuxième caractéristique particulière de l'aube de l'invention, l'âme longitudinale comporte un ou plusieurs ajours. Le ou les ajours permettent de former des points d'ancrage pour la matrice organique et renforcer ainsi sa tenue mécanique sur l'armature.

Selon une troisième caractéristique particulière de l'aube de l'invention, l'aube comporte en outre au moins une plateforme interne ou une plateforme externe formée par la matrice organique.

L'invention a également pour objet un procédé de fabrication d'une aube composite selon la revendication 4.

Comme indiqué ci-avant, l'armature métallique assure la rigidité de l'aube. Il est ainsi possible de définir une géométrie d'armature optimisée en fonction des propriétés du matériau métallique utilisé et des conditions de fonctionnement auxquelles l'aube est destinée comme les efforts subis, le niveau de vibration, la fréquence de résonnance, etc.

La matrice organique utilisée pour définir la forme extérieure de l'aube permet de compléter la fabrication de l'aube composite tout en maîtrisant sa masse globale.

Selon une première caractéristique particulière du procédé de l'invention, la réalisation de l'armature métallique comprend en outre la formation d'une portion de protection formant un bord d'attaque de l'aube, la portion de protection formant une seule pièce avec l'âme longitudinale et ladite au moins une base de fixation. En réalisant le bord d'attaque directement avec l'armature métallique, on simplifie grandement la fabrication de l'aube notamment par rapport aux solutions de fabrication consistant à rapporter un clinquant métallique sur une préforme composite.

Selon une deuxième caractéristique particulière du procédé de l'invention, l'âme longitudinale comporte un ou plusieurs ajours. Cela permet d'améliorer la tenue de la matrice sur l'armature.

L'invention a encore pour objet l'application du procédé de fabrication d'une aube composite de l'invention à la fabrication d'une aube directrice de sortie, d'une aube directrice d'entrée, ou d'une aube de stator à calage variable.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1A et 1B sont des vues schématique en perspective d'une aube directrice de sortie selon un mode de réalisation de l'invention ;
- les figures 2A et 2B sont des vues schématique en perspective de l'armature métallique de l'aube composite de la figure 1 ;
- la figure 3 est une vue schématique en perspective montrant la mise en place de l'armature métallique des figures 2A et 2B dans un moule d'injection ;
- la figure 4 est une vue schématique en perspective montrant l'armature métallique des figures 2A et 2B dans un moule d'injection fermé ;
- la figure 5 est une vue schématique en perspective montrant l'injection d'une résine dans le moule de la figure 4 ;
- la figure 6 est vue en coupe du moule de la figure 5 selon le plan de coupe VI-VI de la figure 5.

### Description détaillée de l'invention

L'invention s'applique à la réalisation d'aubes composite pour moteur aéronautique à turbine à gaz.

Des exemples non limitatifs de telles aubes sont notamment les aubes directrices de sortie (appelées OGV pour « Outlet Guide Vane »), les aubes directrices d'entrée (appelées IGV pour « Inlet Guide Vane »), les aubes de stator à calage variable (appelées VSV pour « Variable Stator Vane »), etc.

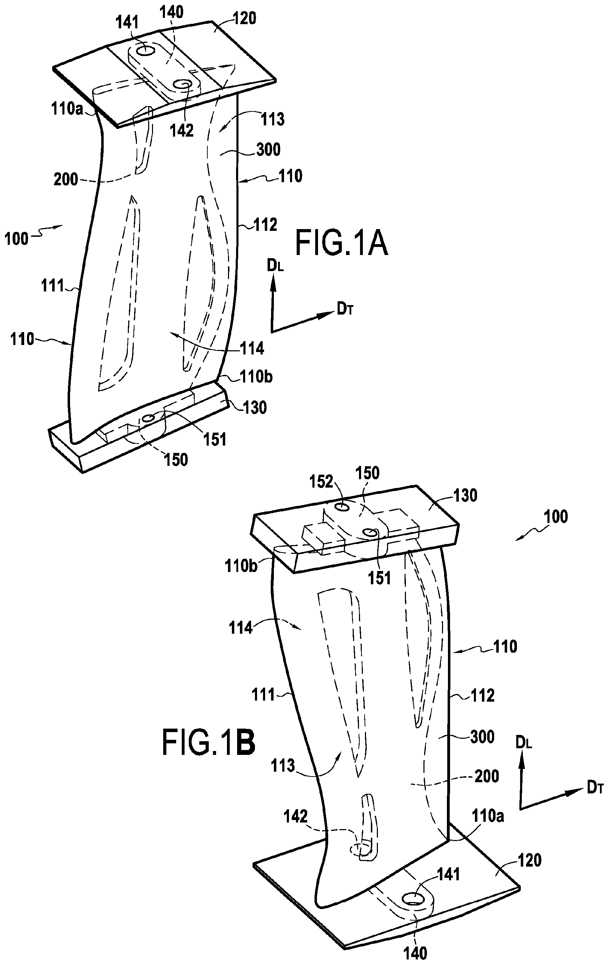

Un procédé conforme à l'invention va être décrit en relation avec la fabrication d'une aube composite directrice de sortie telle que l'aube 100 illustrée sur les figures 1A et 1B qui comprend un corps d'aube 110 s'étendant suivant une direction longitudinale D_{L} entre une extrémité interne 110b et une extrémité externe 110a et suivant une direction transversale D_{T} entre un bord d'attaque 111 et un bord de fuite 112. Le corps d'aube 110 comporte également une face intrados 113 et une face extrados 114. L'aube 100 comporte également une plateforme interne 130 reliée à l'extrémité interne 110b du corps d'aube 110 et une plateforme externe 120 reliée à l'extrémité externe 110a du corps d'aube 110. L'aube 100 comprend en outre une base de fixation interne 150 présente dans la plateforme interne 130, la base de fixation interne 150 comportant des éléments de fixation permettant de fixer l'aube 100 à une partie radiale interne d'un moteur. Ces éléments de fixation sont par exemple deux orifices 151 et 152 destinés à recevoir des organes de fixation, par exemple de type vis-écrou. L'aube 100 comprend encore une base de fixation externe 140 présente dans la plateforme externe 120, la base de fixation externe 140 comportant des éléments de fixation permettant de fixer l'aube 100 à une partie radiale externe d'un moteur. Ces éléments sont par exemple deux orifices 141 et 142 destinés à recevoir des organes de fixation, par exemple de type vis-écrou.

Conformément à l'invention, l'aube 100 comprend une armature métallique 200 qui définit en une seule pièce une âme longitudinale 210, la base de fixation interne 150 reliée à l'extrémité interne 210b de l'âme 210 qui coïncide avec l'extrémité interne 110b du corps d'aube 110 et la base de fixation externe 140 reliée à l'extrémité externe 210a de l'âme 210 qui coïncide avec l'extrémité externe 110a du corps d'aube 110. Dans l'exemple décrit ici, l'âme longitudinale 210 s'étend suivant la direction longitudinale D_{L} et comporte un longeron central 211 relié aux bases de fixation interne et externe 150 et 140, une portion courbée 212 s'étendant depuis le longeron central 211 suivant les directions longitudinale D_{L} et transversale D_{T} et délimitant un premier ajour 213, et une portion de protection ou de bord d'attaque 214 s'étendant suivant la direction longitudinale D_{L}. La portion de bord d'attaque 214 est reliée ponctuellement au longeron central 211 en trois points 214a, 214b et 214c de manière à délimiter des deuxième et troisièmes ajours 215 et 216. La portion de bord d'attaque 214 forme le bord d'attaque 111 de l'aube 100.

Le nombre d'ajours peut être variable en fonction de la taille de l'aube et du chargement subit en fonctionnement.

Toujours conformément à l'invention, l'armature métallique 200 est surmoulée avec une matrice organique 300 qui définit ici à la fois la forme aérodynamique de l'aube 100, à savoir les faces intrados et extrados 113 et 114 ainsi que la forme finale des plateformes interne et externe 130 et 120.

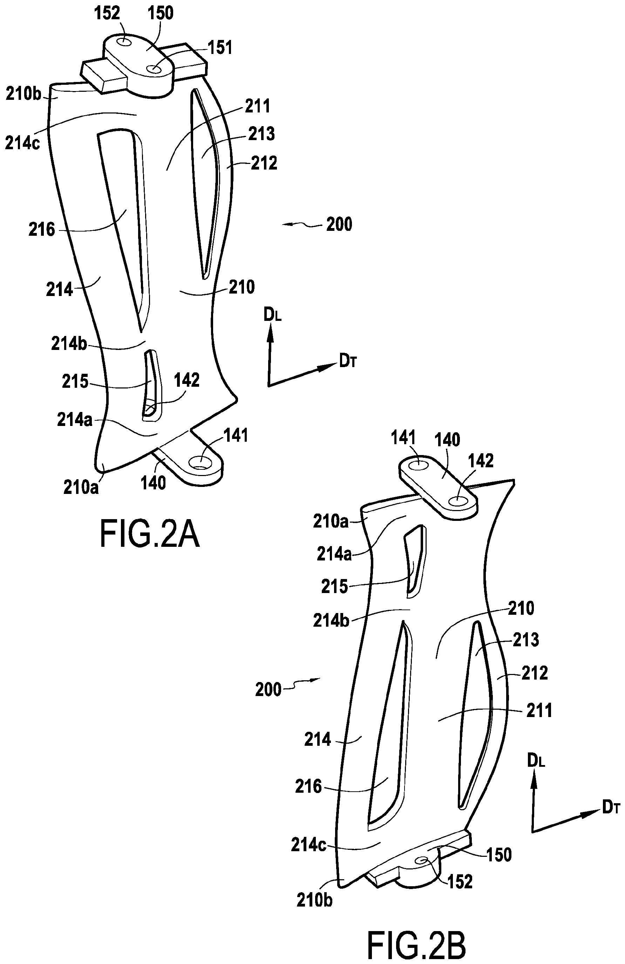

Le procédé de fabrication de l'aube composite 100 débute par la réalisation de l'armature métallique 200 illustrée sur les figures 2A et 2B. L'armature métallique peut être réalisée par différentes techniques connues comme notamment, par fonderie, emboutissage et soudage, électroérosion, ou fabrication additive. L'armature métallique peut être notamment réalisée en aluminium, en titane et ses alliages, ou en acier.

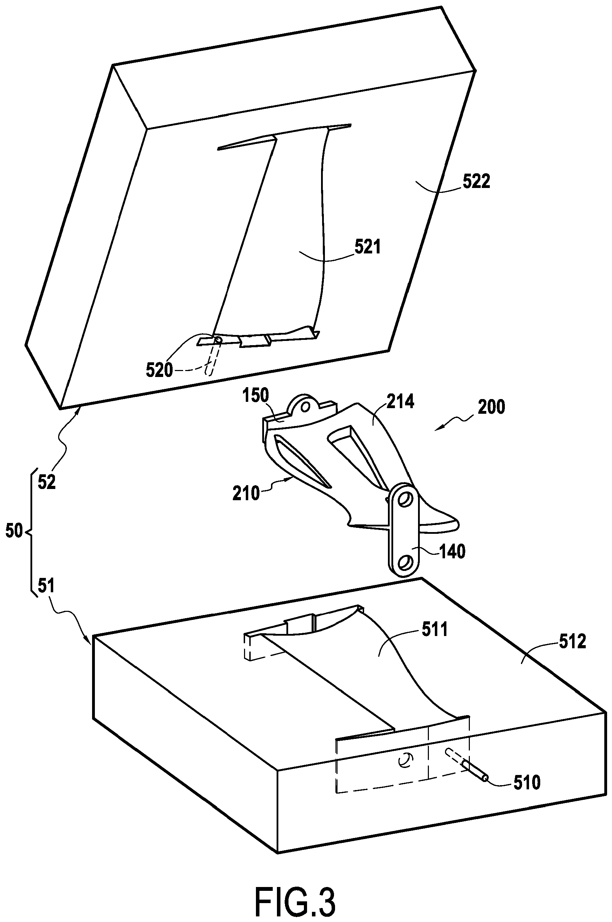

Le procédé de fabrication de l'aube composite se poursuit en plaçant l'armature métallique 200 dans un moule d'injection comme représenté sur la figure 3. Le moule d'injection 50 comprend une première coquille 51 comprenant une première empreinte 511 correspondant en partie à la forme et aux dimensions de l'aube à réaliser, l'empreinte 511 étant entourée par un premier plan de contact 512. La première coquille 51 comprend en outre un port d'injection 510 destiné à permettre l'injection d'une matrice organique. Le moule 50 comprend également une deuxième coquille 52 comprenant en son centre une deuxième empreinte 521 correspondant en partie à la forme et aux dimensions de l'aube à réaliser, la deuxième empreinte 521 étant entourée d'un deuxième plan de contact 522 destiné à coopérer avec le premier plan de contact 512 de la première coquille 51. La deuxième coquille comprend en outre au moins un évent 520, placé à l'opposé du point d'injection et destiné à évacuer les gaz lors de l'injection. Les première et deuxième coquilles peuvent être notamment réalisées en matériau métallique tel que de l'aluminium ou de l'acier par exemple.

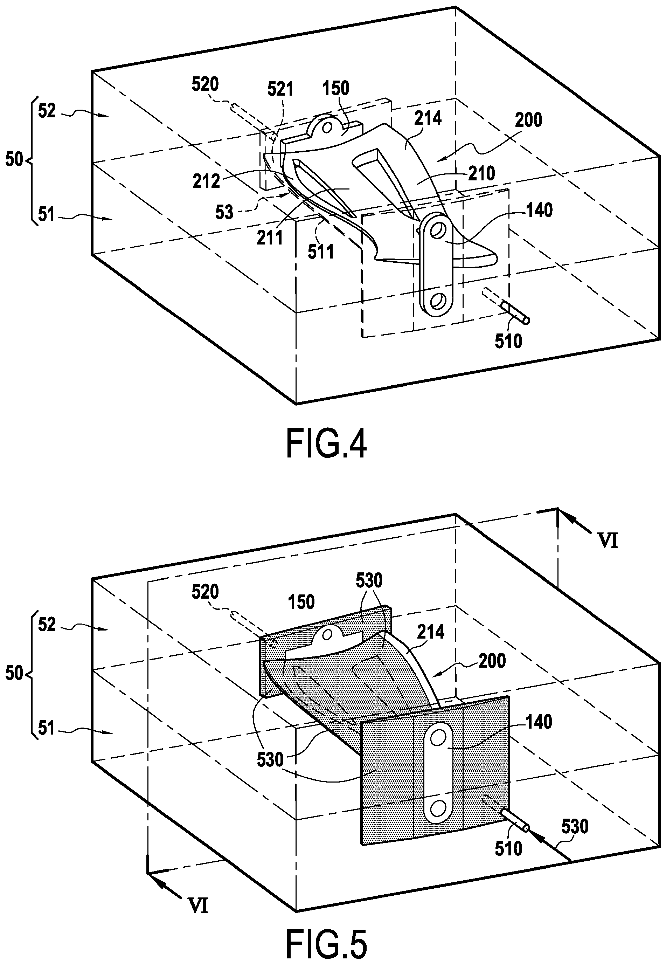

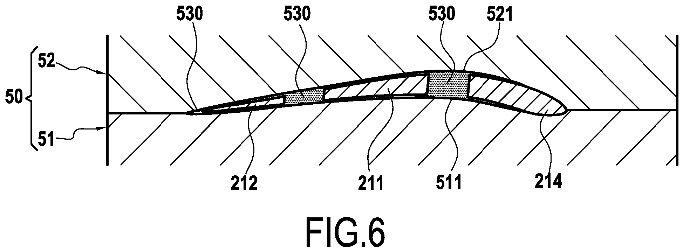

L'armature métallique 200 est tout d'abord positionnée dans l'empreinte 511 de la première coquille 51, la deuxième coquille 52 étant ensuite posée sur la première coquille 51 afin de fermer le moule d'injection 50 comme illustré sur la figure 4. Dans cette configuration, les première et deuxième empreintes 511, 521 définissent ensemble un volume interne 53 ayant la forme de l'aube à réaliser et dans lequel est présente l'armature 200. Dans l'exemple décrit ici, l'empreinte 511 est destinée à former le côté intrados de l'aube tandis que l'empreinte 521 est destinée à former le côté extrados de l'aube. Les empreintes 511 et 521 comprennent aussi des portions destinées à former les plateformes interne et externe de l'aube. Une fois le moule 50 fermé, on injecte via le port d'injection 510 de la première coquille 51 une résine 530 dans le volume interne 53 comme illustré sur la figure 5. L'évent 520 permet l'évacuation des gaz progressivement remplacés par la résine 530. Comme on peut le voir sur la figure 6, la résine 530, une fois injectée dans l'ensemble du volume interne 53, remplit tout le reste du volume interne 53 qui n'est pas occupé par l'armature 200 de manière à définir le profil aérodynamique et les plateformes interne et externe de l'aube.

La résine utilisée peut être notamment choisie parmi la famille des polymères thermoplastiques tels que les polyaryléthercétones (PAEK), la famille des polyimides thermoplastiques tels que les polyétherimides (PEI), la famille des polyamides semi-aromatiques ou la famille des polyamides. Le choix de la classe de température et/ou la nature chimique de la résine est déterminé en fonction des sollicitations thermomécaniques auxquelles doit être soumise la pièce. Une fois la résine injectée dans tout le volume interne 53, on procède au traitement thermique de la résine dont la température et la durée sont déterminées de façon connue en fonction de la nature de la résine utilisée. On obtient alors l'aube 100 illustrée sur les figures 1A et 1B.

Avant son placement dans le moule d'injection, l'armature métallique peut être revêtue d'une couche de primaire d'accrochage afin d'améliorer la tenue de la matrice organique sur l'armature. Le primaire d'accrochage peut être un liquide ou une suspension déposée au pinceau, au pistolet, ou par toute autre technique adaptée à former une couche de primaire de quelques microns sur la surface de l'armature métallique. A titre d'exemple, on pourra utiliser le primaire « Xiameter® OFS-6032 Silane » commercialisé par la société Dow Corning.

Dans l'exemple décrit ici, l'aube composite 100 comporte une plateforme interne 130 et une plateforme externe 120. Toutefois, l'aube composite selon l'invention peut ne comporter qu'une seule plateforme interne ou externe. La plateforme interne peut-être en outre surmoulée avec un matériau amortissant comme du polyuréthane, en particulier lorsque l'aube est de petite taille et est fixée à la turbomachine uniquement par sa base de fixation externe. Dans ce cas, la plateforme interne de l'aube subit des vibrations et des déplacements qui sont amortis par ce matériau.

L'aube selon l'invention peut être munie seulement d'une base de fixation externe ou d'une base de fixation interne.

## Revendications

1. Aube composite (100) comportant un corps d'aube (110) s'étendant suivant une direction longitudinale (DL) entre une extrémité interne (110b) et une extrémité externe (110a) et au moins une base de fixation (140, 150) reliée à l'extrémité interne ou l'extrémité externe du corps d'aube, l'aube (100) comprenant une armature métallique (200) associée à une matrice organique (300), **caractérisée en ce que** l'armature métallique (200) définit en une seule pièce une âme longitudinale (210) s'étendant entre les extrémités interne et externe (110b, 110a) du corps d'aube et ladite au moins une base de fixation (140, 150), l'âme longitudinale étant surmoulée avec la matrice organique (300), la matrice organique définissant la forme extérieure de l'aube, l'aube composite (100) comportant en outre une plateforme interne (130) et une plateforme externe (120) formée par la matrice organique (300), l'aube comportant en outre une base de fixation interne (150) reliée à l'extrémité interne (110b) du corps d'aube (110) et une base de fixation externe (140) reliée à l'extrémité externe (110a) du corps d'aube, les bases de fixation interne et externe (150, 140) étant définies par l'armature métallique (200) et formant une seule pièce avec l'âme longitudinale (210).

2. Aube selon la revendication 1, dans laquelle l'armature métallique (200) comprend en outre une portion de protection (214) formant un bord d'attaque (111) de l'aube (100), la portion de protection (214) formant une seule pièce avec l'âme longitudinale (210) et ladite au moins une base de fixation (140, 150).

3. Aube selon la revendication 1 ou 2, dans laquelle l'âme longitudinale (210) comporte un ou plusieurs ajours (212, 215, 216).

4. Procédé de fabrication d'une aube composite (100) comportant un corps d'aube (110) s'étendant suivant une direction longitudinale (DL) entre une extrémité interne (110b) et une extrémité externe (110a) et au moins une base de fixation (140, 150) reliée à l'extrémité interne ou l'extrémité externe, l'aube comprenant une armature métallique (200) associée à une matrice organique (300), **caractérisé en ce qu'**il comprend la réalisation d'une armature métallique (200) définissant en une seule pièce une âme longitudinale (210) s'étendant entre des extrémités interne et externe (210b, 210a) et au moins une base de fixation (140, 150) reliée à l'extrémité interne ou l'extrémité externe de l'âme longitudinale, et le surmoulage de l'armature métallique (200) avec une matrice organique (300) de manière à définir la forme extérieure de l'aube, dans lequel la réalisation de l'armature métallique (200) comprend la formation d'une base de fixation interne (150) reliée à l'extrémité interne (210b) de l'âme longitudinale (210) et une base de fixation externe (140) reliée à l'extrémité externe (210a) de l'âme longitudinale, les bases de fixation interne et externe (150, 140) formant une seule pièce avec l'âme longitudinale (210) et,
comprenant, lors du surmoulage de l'armature métallique (200), la formation d'une plateforme interne (130) et d'une plateforme externe (120) par la matrice organique (300).

5. Procédé selon la revendication 4, dans lequel la réalisation de l'armature métallique (200) comprend en outre la formation d'une portion de protection (214) formant un bord d'attaque (111) de l'aube (100), la portion de protection (214) formant une seule pièce avec l'âme longitudinale (210) et ladite au moins une base de fixation (114, 115).

6. Procédé selon la revendication 4 ou 5, dans lequel l'âme longitudinale (210) comporte un ou plusieurs ajours (212, 215, 216).

7. Utilisation du procédé selon l'une quelconque des revendications 4 à 6 à la fabrication d'une aube directrice de sortie, d'une aube directrice d'entrée, ou d'une aube de stator à calage variable.

## Patentansprüche

1. Schaufel aus Verbundmaterial (100), aufweisend einen Schaufelkörper (110), der sich gemäß einer Längsrichtung (DL) zwischen einem inneren Ende (110b) und einem äußeren Ende (110a) und mindestens eine Befestigungsbasis (140, 150) erstreckt, die mit dem inneren Ende oder dem äußeren Ende des Schaufelkörpers verbunden ist, wobei die Schaufel (100) eine Metallverstärkung (200) umfasst, die einer organischen Matrix (300) zugeordnet ist, **dadurch gekennzeichnet, dass** die Metallverstärkung (200) einen länglichen Kern (210) in einem einzigen Teil definiert, der sich zwischen dem inneren und äußeren Ende (110b, 110a) des Schaufelkörpers und der mindestens einen Befestigungsbasis (140, 150) erstreckt, wobei der längliche Kern mit der organischen Matrix (300) überformt ist, wobei die organische Matrix die äußere Form der Schaufel definiert, wobei die Schaufel aus Verbundmaterial (100) ferner eine innere Plattform (130) und eine äußere Plattform (120) aufweist, die von der organischen Matrix (300) gebildet ist, wobei die Schaufel ferner eine innere Befestigungsbasis (150) aufweist, die mit dem inneren Ende (110b) des Schaufelkörpers (110) verbunden ist, und eine äußere Befestigungsbasis (140), die mit dem äußeren Ende (110a) des Schaufelkörpers verbunden ist, wobei die innere und äußere Befestigungsbasis (150, 140) durch die Metallverstärkung (200) definiert sind und mit dem länglichen Kern (210) ein einziges Teil bilden.

2. Schaufel nach Anspruch 1, wobei die Metallverstärkung (200) ferner einen Schutzabschnitt (214) umfasst, der eine Vorderkante (111) der Schaufel (100) bildet, wobei der Schutzabschnitt (214) mit dem länglichen Kern (210) und der mindestens einen Befestigungsbasis (140, 150) ein einziges Teil bildet.

3. Schaufel nach Anspruch 1 oder 2, wobei der längliche Kern (210) einen oder mehrere Durchbrüche (212, 215, 216) aufweist.

4. Verfahren zur Herstellung einer Schaufel aus Verbundmaterial (100), aufweisend einen Schaufelkörper (110), der sich gemäß einer Längsrichtung (DL) zwischen einem inneren Ende (110b) und einem äußeren Ende (110a) und mindestens einer Befestigungsbasis (140, 150) erstreckt, die mit dem inneren Ende oder dem äußeren Ende verbunden ist, wobei die Schaufel eine Metallverstärkung (200) umfasst, die einer organischen Matrix (300) zugeordnet ist, **dadurch gekennzeichnet, dass** es die Herstellung einer Metallverstärkung (200) umfasst, die einen länglichen Kern (210) in einem einzigen Teil definiert, der sich zwischen einem inneren und äußeren Ende (210b, 210a) und mindestens einer Befestigungsbasis (140, 150) erstreckt, die mit dem inneren Ende oder dem äußeren Ende des länglichen Kerns verbunden ist, und das Überformen der Metallverstärkung (200) mit einer organischen Matrix (300) derart, um die äußere Form der Schaufel zu definieren, wobei die Herstellung der Metallverstärkung (200) das Bilden einer inneren Befestigungsbasis (150) umfasst, die mit den inneren Ende (210b) des länglichen Kerns (210) verbunden ist, und einer äußeren Befestigungsbasis (140), die mit dem äußeren Ende (210a) des länglichen Kerns verbunden ist, wobei die innere und äußere Befestigungsbasis (150, 140) mit dem länglichen Kern (210) ein einziges Teil bilden, und
umfassend, beim Überformen der Metallverstärkung (200), das Bilden einer inneren Plattform (130) und einer äußeren Plattform (120) durch die organische Matrix (300).

5. Verfahren nach Anspruch 4, wobei die Herstellung der Metallverstärkung (200) ferner das Bilden eines Schutzabschnitts (214) umfasst, der eine Vorderkante (111) der Schaufel (100) bildet, wobei der Schutzabschnitt (214) mit dem länglichen Kern (210) und der mindestens einen Befestigungsbasis (114, 115) ein einziges Teil bildet.

6. Verfahren nach Anspruch 4 oder 5, wobei der längliche Kern (210) einen oder mehrere Durchbrüche (212, 215, 216) umfasst.

7. Verwendung des Verfahrens nach einem der Ansprüche 4 bis 6 für die Herstellung einer Ausgangs-Leitschaufel, einer Eingangs-Leitschaufel oder einer Statorschaufel mit veränderbarer Einstellung.

## Claims

1. A composite vane (100) comprising both a vane body (110) extending in a longitudinal direction (DL) between an inner end (110b) and an outer end (110a) and also at least one fastener base (140, 150) connected to the inner end or to the outer end of the vane body, the vane (100) comprising metal reinforcement (200) associated with an organic matrix (300), the vane being **characterized in that** the metal reinforcement (200) defines integrally as a single part both a longitudinal core (210) extending between the inner and outer ends (110b, 110a) of the vane body and also said at least one fastener base (140, 150), the longitudinal core having the organic matrix (300) overmolded thereon, the organic matrix defining the outside shape of the vane, the vane (100) also comprising an inner and outer platform (130, 120) formed by the organic matrix(300), the vane (100) further comprising an inner fastener base (150) connected to the inner end (110b) of the vane body (110) and an outer fastener base (140) connected to the outer end (110a) of the vane body, the inner and outer fastener bases (150, 140) both being defined by the metal reinforcement (200) and being made integrally with the longitudinal core (210) .

2. A vane according to claim 1, wherein the metal reinforcement (200) further comprises a protective portion (214) forming a leading edge (111) of the vane (100), the protective portion (214) being made integrally with the longitudinal core (210) and said at least one fastener base (140, 150).

3. A vane according to claim 1 or claim 2, wherein the longitudinal core (210) includes one or more openings (212, 215, 216).

4. A method of manufacturing a composite vane (100) comprising both a vane body (110) extending in a longitudinal direction (DL) between an inner end (110b) and also an outer end (110a) and at least one fastener base (140, 150) connected to the inner end or to the outer end, the vane comprising metal reinforcement (200) associated with a metal matrix (300), the method being **characterized in that** it comprises making metal reinforcement (200) defining integrally as a single part both a longitudinal core (210) extending between inner and outer ends (210b, 210a) and also at least one fastener base (140, 150) connected to the inner end or to the outer end of the longitudinal core, and overmolding an organic matrix (300) on the metal reinforcement (200) so as to define the outside shape of the vane, wherein making the metal reinforcement (200) includes forming an inner fastener base (150) connected to the inner end (210b) of the longitudinal core (210) and an outer fastener base (140) connected to the outer end (210a) of the longitudinal core, the inner and outer fastener bases (150, 140) being formed integrally with the longitudinal core (210), and including forming at least one inner platform (130) or at least one outer platform (120) during overmolding of the organic matrix (300) on the metal reinforcement (200) .

5. A method according to claim 4, wherein making the metal reinforcement (200) further comprises forming a protective portion (214) forming a leading edge (111) of the vane (100), the protective portion (214) being formed integrally with the longitudinal core (210) and said at least one fastener base (114, 115).

6. A method according to claim 4 or claim 5, wherein the longitudinal core (210) includes one or more openings (212, 215, 216).

7. The use of the method according to any one of claims 4 to 6 for manufacturing an outlet guide vane, an inlet guide vane, or a variable guide vane.
